Europäisches Patentamt

European Patent Office

Office européen des brevets

(11) Veröffentlichungsnummer: **0 245 297**
**B1**

(12) **EUROPÄISCHE PATENTSCHRIFT**

(45) Veröffentlichungstag der Patentschrift: **22.11.90**

(51) Int. Cl.⁵: **C 03 C 3/247**

(21) Anmeldenummer: **86905744.8**

(22) Anmeldetag: **17.10.86**

(86) Internationale Anmeldenummer:
**PCT/DE86/00413**

(87) Internationale Veröffentlichungsnummer:
**WO 87/02350 23.04.87 Gazette 87/09**

(54) **OPTISCHE FLUORPHOSPHATGLÄSER.**

(30) Priorität: **19.10.85 DE 3537293**
**11.10.86 DE 3634676**

(43) Veröffentlichungstag der Anmeldung:
**19.11.87 Patentblatt 87/47**

(45) Bekanntmachung des Hinweises auf die
Patenterteilung:
**22.11.90 Patentblatt 90/47**

(84) Benannte Vertragsstaaten:
**AT CH DE FR GB LI NL**

(56) Entgegenhaltungen:
**DE-A-2 231 238**
**JP-A-6 081 042**
**US-A-4 213 788**

**Chemical Abstracts, Vol. 103, No. 10, 9**
**September 1985, Columbus, Ohio (US), p. 255,**
**abstract 75254q**

**Chemical Abstracts, Vol. 89, No. 18, 30 October**
**1978, Columbus, Ohio (US), p. 278, abstract**
**151392t**

(73) Patentinhaber: **Wild Leitz GmbH**
**Ernst-Leitz-Strasse 30 Postfach 20 20**
**D-6330 Wetzlar 1 (DE)**

(72) Erfinder: **BRÖMER, Heinz**
**Am Hundsrück 7**
**D-6330 Wetzlar 26 (DE)**
Erfinder: **HUBER, Werner**
**Bahnhofstr. 16**
**D-6336 Solms-Albshausen (DE)**
Erfinder: **MEINERT, Norbert**
**Am Sportfeld 5**
**D-6336 Solms-Albshausen (DE)**

(56) Entgegenhaltungen:
**Chemical Abstracts, Vol. 87, No. 20, 14**
**November 1977, Columbus, Ohio (US), p. 243,**
**abstract 156133c**

Courier Press, Leamington Spa, England.

**Beschreibung**

Die Anmeldung betrifft optische Fluorphosphatgläser auf der Basis von Bariummetaphosphat, Aluminiummetaphosphat, Erdalkalifluoriden und Aluminiumfluorid mit verbesserten physiko-chemischen Eigenschaften sowie ein Verfahren zu ihrer Herstellung.

Fluorphosphatgläser mit positiver anomaler Teildispersion werden seit längerer Zeit für die Herstellung von apochromatischen Mikroskopobjektiven eingesetzt. In den letzten Jaren hat aber auch auf dem Sektor der Foto-Optik, speziell für hochgeöffnete Teleobjektive, der Einsatz dieser Gläser enorm zugenommen. Gut korrigierte, langbrennweitige Teleobjektive sind ohne diese Gläser nicht darstellbar.

Fluorphosphatgläser mit ihren hervorragenden optischen Eigenschaften haben aber gegenüber den normalen Silikat- und Borosilikatgläsern den Nachteil, daß ihre übrigen physikalischen Eigenschaften, wie beispielsweise der lineare thermische Ausdehnungskoeffizient, die Transformationstemperatur sowie die Knoop-Härte, nicht optimal sind, wodurch bei der Linsenbearbeitung wie auch im späteren Einsatz Schwierigkeiten bzw. Reklamationen die Folge sein können.

Beim Einsatz in Mikro-Optiken—hier handelt es sich um Linsendurchmesser von nur einigen Millimetern—sind diese Probleme relativ leicht zu überwinden. Anders dagegen bei der Herstellung von Linsen für langbrennweitige Teleobjektive, die teilweise Linsendurchmesser von mehr als 200 mm aufweisen.

Aus der DE—A—2 231 238 ist ein Fluorphosphatglas bekannt, dessen optische und physiko-chemischen Parameter im wesentlichen den in Tabelle 2 angegebenen Werten für das "handelsübliche Glas" entsprechen. Hinsichtlich der chemischen Zusammensetzung weist dieses bekannte Glas einen wesentlich geringeren Strontiumanteil sowie einen höheren Bariumanteil auf. Weitere Abweichungen ergeben sich bezüglich des Magnesium- und des Sauerstoffanteils, gerechnet in Gewichts-Prozenten auf der Basis der Elemente. Dieses bekannte Glas konnte in 3 kg-Schmelzen hergestellt und zu Preßlingen von maximal 50 mm Durchmesser verarbeitet werden. Demgegenüber können die erfindungsgemäßen Gläser aus mindestens 10 kg-Schmelzen hergestellt werden, wobei sich Preßlingsgrößen bis 200 mm realisieren lassen.

Aus der US—PS 4 213 788 sind Fluorphosphatgläser mit vergleichbaren Brechzahlen und Abbewerten bekannt geworden. Hinsichtlich ihrer chemischen Zusammensetzung weisen die Beispiele 2 und 3 jedoch bei mindestens vier Elementen (in Gew.-%) Abweichungen gegenüber den erfindungsgemäßen Gläsern auf. Es sind dies die Elemente Ca, P, O und F. Über weitere optische und physiko-chemische Parameter ist aus dieser Druckschrift nichts bekannt. Schließlich sind aus der JP—A—6081042 optische Fluorphosphatgläser bekannt, deren elementare Zusammensetzungen bezüglich der Gew.-%-Anteile des Al, des O und des F jeweils abweichen von den erfindungsgemäßen Anteilen.

Es ist daher die Aufgabe der vorliegenden Erfindung, derartige optische Gläser bereitzustellen, bei denen unter Beibehaltung ihrer extremen optischen Daten (Brechzahl, Abbe-Wert, anomale Teildispersion) die physiko-chemischen Eigenschaften dieser Gläser so verbessert werden, daß eine Bearbeitung der aus den erfindungsgemäßen Gläsern hergestellten Optik-Bauelemente (Linsen, Prismen und dgl.) ohne Schwierigkeiten möglich, der Anwendungsbereich derartiger Gläser erweitert und eine wesentliche Kostenersparnis bei der Herstellung entsprechender Linsen erzielt wird. Die Aufgabe besteht darüber hinaus darin, ein Verfahren zum schlierenfreien Erschmelzen dieser Gläser in großen Einheiten anzugeben.

Diese Aufgabe wird bei einem optischen Fluorphosphatglas auf der Basis von $Ba(PO_3)_2$, $Al(PO_3)_3$, Erdalkalifluoriden und $AlF_3$ mit einer Brechzahl $n_e$ zwischen 1.47 und 1.50, einem Abbe-Wert $v_e$ zwischen 85 und 80 sowie einem positiven anomalen Teildispersionswert $+\Delta v_e$ zwischen 17 und 22 erfindungsgemäß dadurch gelöst, daß es folgende elementare Zusammensetzung in Gew.-% aufweist: Magnesium (Mg): 0,5 bis 3,0; Kalzium (Ca): 8 bis 10; Strontium (Sr): 12 bis 20; Barium (Ba): 9 bis 12; Aluminium (Al): 7 bis 9; Titan (Ti): 0 bis 1; Natrium (Na): 0 bis 1; Kalium (K): 0 bis 3; Phosphor (P): 5 bis 9; Sauerstoff (O): 8 bis 12; Fluor (F): 35 bis 38 und Wasserstoff (H): 0 bis 0,5. Sie wird darüber hinaus durch ein Verfahren zur Herstellung eines derartigen Glases gelöst, welches aus einem Gemenge mit folgender Zusammensetzung in Gew.-% erschmolzen wird: Bariummetaphosphat ($Ba(PO_3)_2$): 18 bis 20; Aluminiummetaphosphat ($Al(PO_3)_3$): 4 bis 7; Magnesiumfluorid ($MgF_2$): 1,5 bis 4; Kalziumfluorid ($CaF_2$): 18 bis 20; Strontiumfluorid ($SrF_2$): 25 bis 29; Bariumfluorid ($BaF_2$): 0,5 bis 2 und Aluminiumfluorid ($AlF_3$): 22 bis 26. Weitere Ausgestaltungen ergeben sich aus den Unteransprüchen.

In der folgenden Tabelle 1 sind die optischen und physikochemischen Eigenschaften eines handelsüblichen Glases und daneben diejenigen Eigenschaften eines erfindungsgemäßen Glases (Glas Nr. 1) gegenübergestellt.

TABELLE 1

| bekanntes Glas | Parameter | erfindungsgemäßes Glas Nr. 1 |
|---|---|---|
| 1,4879 | $n_e$ | 1,4879 |
| 84,1 | $v_e$ | 84,1 |
| 0,4773 | $u'_g$ | 0,4773 |
| +21,0 | $\Delta v_e$ | +21,0 |
| 16,0 | $\alpha_{20/300}°C$ $[10^{-6} \cdot 1/°C]$ | 14,7 |
| 405 | $T_g$ [°C] | 480 |
| 3,73 | $\rho$ [g/cm$^3$] | 3,61 |
| 360 | HK | 385 |

Die ersten vier angegebenen Parameter bezeichnen optische Eigenschaften und bedeuten:

$n_e$=Brechzahl

$v_e$=Abbe-Zahl (Reziprok-Wert der Dispersion)

$u'_g$=(eigentliche) anomale Teildispersion, wobei gilt:

$$u_g'=\frac{n_g-n_F'}{n_F'-n_C'};$$

dabei bedeuten die tiefgestellten Indizes:

g=blaue Quecksilberlinie (435,84 nm);

F'=blaue Cadmiumlinie (479,99 nm);

C'=rote Cadmiumlinie (643,85 nm);

$+\Delta v_e$=positive Abweichung von der "Normalgeraden", wie sie beispielsweise in der Zeichnung der DE—PS 14 96 563 bzw. der korrespondierenden US—PS 34 51 829 graphisch dargestellt wurde. Dieser Differenzbetrag wird als "positiver anomaler Teildispersionswert" bezeichnet.

Die unteren vier Parameter bezeichnen physiko-chemische Eigenschaften, und zwar:

$\alpha_{20/300}°C$=linearer thermischer Ausdehnungskoeffizient $[10^{-6} \cdot 1/°C]$

$T_g$=Transformationstemperatur [°C]

$\rho$=Dichte [g/cm$^3$]

HK=Knoop-Härte.

Das erfindungsgemäße Glas Nr. 1 weist die folgende Transmissionscharakteristik auf:

| $\lambda$ [nm] | $\tau_i$ (5 mm) | $\tau_i$ (25 mm) |
|---|---|---|
| 1014,0 | 0,998 | 0,990 |
| 700,0 | 0,999 | 0,993 |
| 660,0 | 0,998 | 0,990 |
| 620,0 | 0,997 | 0,988 |
| 580,0 | 0,997 | 0,985 |
| 546,1 | 0,997 | 0,985 |
| 500,0 | 0,995 | 0,978 |
| 460,0 | 0,993 | 0,965 |
| 435,8 | 0,990 | 0,953 |
| 420,0 | 0,992 | 0,961 |
| 404,7 | 0,991 | 0,958 |
| 400,0 | 0,991 | 0,958 |
| 390,0 | 0,985 | 0,927 |
| 380,0 | 0,980 | 0,905 |
| 370,0 | 0,975 | 0,882 |
| 365,0 | 0,972 | 0,866 |
| 350,0 | 0,941 | 0,737 |
| 341,1 | 0,875 | 0,512 |
| 320,0 | 0,752 | 0,240 |
| 310,0 | 0,607 | 0,082 |
| 300,0 | 0,429 | 0,015 |
| 290,0 | 0,253 | 0,001 |
| 280,0 | 0,127 | — |

Dabei bedeuten:

$\lambda$: die verwendete Meßwellenlänge [nm];

$\tau_i$ (5 mm): den Reintransmissionsgrad eines 5 mm starken Glasplättchens;

$\tau_i$ (25 mm): den Reintransmissionsgrad eines 25 mm starken Glasplättchens.

Das erhaltene Glas ist fluoreszenzarm und zu Linsenrohlingen von großen Durchmessern verpreßbar. Es ist außerdem schlierenfrei.

In der nachfolgenden Tabelle 2 ist ein weiteres handelsübliches Glas einem weiteren erfindungsgemäßen Ausführungsbeispiel (Glas Nr. 2) gegenübergestellt:

TABELLE 2

| handelsübliches Glas | Parameter | erfindungsgemäßes Glas Nr. 2 |
|---|---|---|
| 1,4874 | $n_e$ | 1,4874 |
| 81,4 | $v_e$ | 81,4 |
| 0,4772 | $u_g{}'$ | 0,4772 |
| +18,2 | $\Delta v_e$ | +18,2 |
| 16,0 | $\alpha_{20/300}{}^{\circ}C$ $[10^{-6} \cdot 1/{}^{\circ}C]$ | 14,6 |
| 434 | $T_g$ [°C] | 472 |
| 3,64 | $\rho$ [g/cm$^3$] | 3,51 |
| 360 | HK | 390 |

Die Transmissionscharakteristik des Glases Nr. 2 wird in der nachfolgenden Aufstellung angegeben:

4

| $\lambda$ [nm] | $\tau_i$ (5 mm) | $\tau_i$ (25 mm) |
|---|---|---|
| 1014,0 | 0,999 | 0,995 |
| 700,0 | 0,999 | 0,995 |
| 660,0 | 0,998 | 0,993 |
| 620,0 | 0,998 | 0,990 |
| 580,0 | 0,997 | 0,988 |
| 546,1 | 0,997 | 0,988 |
| 500,0 | 0,995 | 0,978 |
| 460,0 | 0,993 | 0,965 |
| 435,8 | 0,991 | 0,956 |
| 420,0 | 0,991 | 0,958 |
| 404,7 | 0,991 | 0,958 |
| 400,0 | 0,991 | 0,956 |
| 390,0 | 0,983 | 0,919 |
| 380,0 | 0,972 | 0,866 |
| 370,0 | 0,966 | 0,841 |
| 365,0 | 0,958 | 0,807 |
| 350,0 | 0,901 | 0,595 |
| 334,1 | 0,760 | 0,040 |
| 310,0 | 0,325 | 0,004 |
| 300,0 | 0,151 | — |
| 290,0 | 0,054 | — |

Auch dieses Glas ist farblos, schlieren- und blasenarm. Es ist darüber hinaus weitestgehend fluoreszenzfrei und zu Linsenrohlingen von großem Durchmesser verpreßbar. Aus den Tabellen 1 und 2 wird deutlich, daß die physiko-chemischen Parameter erheblich verbessert werden konnten. So konnte der lineare thermische Ausdehnungskoeffizient um 8,1 bzw. 8,7% verringert werden; die Transformationstemperatur konnte im Falle des Glases Nr. 1 um 18,5% und im Falle des Glases Nr. 2 um 8,8% erhöht werden; die Dichte konnte um 3,2% bzw. 3,6% verringert werden und die Knoop-Härte konnte um 6,9% bzw. 8,3% erhöht werden. Es muß hervorgehoben werden, daß diese technologischen und werkstoffspeizifischen Eigenschaftsverbesserungen unter Beibehaltung der primär bedeutsamen optischen Lage-Parameter ($n_e$, $v_e$, $\Delta v_e$) erzielt werden konnten.

In der nachfolgenden Tabelle 3 sind die chemischen Komponenten für das Ausgangsgemenge des Glases Nr. 1 in Mol-Prozenten (Mol-%) und in Gewichts-Prozenten (Gew.-%) angegeben. Darüber hinaus wurden die elementaren Anteile in Gewichts-Prozenten (Gew.-%) aufgeführt. Beispielsweise ergibt sich bei dem $Ba(PO_3)_2$, das mit 19,7 Gew.-% vorhanden ist, eine Aufspaltung in 9,2 Gew.-% Barium, 4,1 Gew.-% Phosphor und 6,4 Gew.-% Sauerstoff.

TABELLE 3

| Glas Nr. 1 | Mol-% | Gew.-% | Gew.-% | | | | | |
|---|---|---|---|---|---|---|---|---|
| $Ba(PO_3)_2$ | 7,50 | 19,7 | Ba | 9,20 | P | 4,10 | 0 | 6,40 |
| $Al(PO_3)_3$ | 2,35 | 5,6 | Al | 0,57 | P | 2,00 | 0 | 3,03 |
| $MgF_2$ | 5,04 | 2,8 | Mg | 1,09 | F | 1,71 | | |
| $CaF_2$ | 27,44 | 19,1 | Ca | 9,80 | F | 9,30 | | |
| $SrF_2$ | 24,30 | 27,3 | Sr | 19,02 | F | 8,28 | | |
| $BaF_2$ | 0,67 | 1,0 | Ba | 0,80 | F | 0,20 | | |
| $AlF_3$ | 32,70 | 24,5 | Al | 7,87 | F | 16,63 | | |

Eine Aufsummierung aller erhaltenen elementaren Anteile von Tabelle 3 ergibt folgende Zusammensetzung (in Gew.-%):

| Mg | 1,09 |
|---|---|
| Ca | 9,80 |
| Sr | 19,02 |
| Ba | 10,00 |
| Al | 8,44 |
| P | 6,10 |
| O | 9,43 |
| F | 36,12 |
| $\Sigma$ = | 100,00 |

In entsprechender Weise ist in der nachfolgenden Tabelle 4 für das Glas Nr. 2 das Ausgangsgemenge in Mol-% und Gew.-% angegeben sowie die entsprechenden elementaren Anteile in gew.-% aufgeführt.

TABELLE 4

| Glas Nr. 2 | Mol-% | Gew.-% | Gew.-% | | | | | | | |
|---|---|---|---|---|---|---|---|---|---|---|
| $NaPO_3$ | 1,72 | 1,6 | Na | 0,36 | P | 0,49 | O | 0,75 | | |
| $Ba(PO_3)_2$ | 1,85 | 5,0 | Ba | 2,32 | P | 1,05 | O | 1,63 | | |
| $Al(PO_3)_3$ | 6,52 | 15,7 | Al | 1,60 | P | 5,53 | O | 8,57 | | |
| $MgF_2$ | 9,83 | 5,6 | Mg | 2,18 | F | 3,42 | | | | |
| $CaF_2$ | 25,10 | 17,9 | Ca | 9,19 | F | 8,71 | | | | |
| $SrF_2$ | 16,47 | 18,9 | Sr | 13,18 | F | 5,72 | | | | |
| $BaF_2$ | 6,75 | 10,8 | Ba | 8,46 | F | 2,34 | | | | |
| $AlF_3$ | 26,87 | 20,6 | Al | 6,62 | F | 13,98 | | | | |
| $KHF_2$ | 4,62 | 3,3 | K | 1,65 | F | 1,61 | H | 0,04 | | |
| $K_2TiF_6$ | 0,27 | 0,6 | K | 0,20 | F | 0,28 | Ti | 0,12 | | |

Die Aufsummierung der elementaren Anteile von Tabelle 4 ergibt (in Gew.-%):

| Na | 0,36 |
|---|---|
| K | 1,85 |
| Mg | 2,18 |
| Ca | 9,19 |
| Sr | 13,18 |
| Ba | 10,78 |
| Al | 8,22 |
| Ti | 0,12 |
| P | 7,07 |
| O | 10,95 |
| F | 36,06 |
| $\Sigma$ = | 100,00 |

Nachfolgend wird die Durchführung einer 10 kg-Schmelze beschrieben: Die vorzugsweise maschinell gemischte Einwaage wird in kleinen Portionen in einen Platintiegel eingelegt, dessen Temperatur konstant bei ca. 850°C gehalten wird, bis die Gesamteinwaage eingeschmolzen ist. Das Einlegen dauert ca. 90 Minuten. Anschließend wird die Temperatur innerhalb von 15 Minuten auf ca. 1080°C kontinuierlich erhöht. Ist diese Temperatur erreicht, so wird ein vorzugsweise dreipaariger Flügelrührer eingesetzt und mit einer Rührgeschwindigkeit von etwa 150 Umdrehungen pro Minute eine sogenannte Intervall-Rührung durchgeführt. Nach einer Rührzeit von etwa 25 Minuten wird die Temperatur auf ca. 900°C zurückgefahren. Die Rührgeschwindigkeit beträgt dabei nur noch etwa 120 Umdrehungen pro Minute.

Ist die Schmelze blasenfrei, wird die Rührgeschwindigkeit erneut reduziert, und zwar auf etwa 80 Umdrehungen pro Minute und dabei auf eine Abgußtemperatur von ca. 710°C zurückgefahren. Der Abguß erfolgt in auf ungefähr 500°C vorgewärmte Abgußformen aus Aluminum. Die Abkühlung nachfolgende wird in einem programmgesteuerten Temperofen durchgeführt.

**Patentansprüche**

1. Optisches Fluorphosphatglas auf der Basis von $Ba(PO_3)_2$, $Al(PO_3)_3$, Erdalkalifluoriden und $AlF_3$ mit einer Brechzahl $n_e$ zwischen 1,47 und 1,50, einem Abbe-Wert $v_e$ zwischen 85 und 80 sowie einem positiven anomalen Teildispersionswert $+\Delta v_e$ zwischen 17 und 22, dadurch gekennzeichnet, daß es folgende elementare Zusammensetzung aufweist (in Gew.-%):

| | |
|---|---|
| Mg | 0,5 — 3,0 |
| Ca | 8 —10 |
| Sr | 12 —20 |
| Ba | 9 —12 |
| Al | 7 — 9 |
| Ti | 0 — 1 |
| Na | 0 — 1 |
| K | 0 — 3 |
| P | 5 — 9 |
| O | 8 —12 |
| F | 35 —38 |
| H | 0 — 0,5 |

2. Glas nach Anspruch 1 mit einer Brechzahl $n_e$ zwischen 1,48 und 1,49, einem Abbe-Wert $v_e$ zwischen 84,1 und 81,4 sowie einem positiven anomalen Teildispersionswert $+\Delta v_e$ zwischen 18,2 und 21,0, gekennzeichnet durch die folgende elementare Zusammensetzung (in Gew.-%):

| | |
|---|---|
| Mg | 1,0— 2,2 |
| Ca | 9,1— 9,8 |
| Sr | 13,1—19,0 |
| Ba | 10,0—10,8 |
| Al | 8,2— 8,5 |
| Ti | 0 — 0,2 |
| Na | 0 — 0,4 |
| K | 0 — 1,9 |
| P | 6,1— 7,1 |
| O | 9,4—11,0 |
| F | 36,0—36,2 |
| H | 0 — 0,1 |

3. Glas nach einem der vorhergehenden Ansprüche mit einer Brechzahl $n_e$ von 1,488, einem Abbe-Wert $v_e$ von 84,1 sowie einem positiven anomalen Teildispersionswert $+\Delta v_e$ von 21, gekennzeichnet durch die folgende elementare Zusammensetzung (in Gew.-%):

| | |
|---|---|
| Mg | 1,1 |
| Ca | 9,8 |
| Sr | 19,0 |
| Ba | 10,0 |
| Al | 8,5 |
| P | 6,1 |
| O | 9,4 |
| F | 36,1 |

4. Glas nach Anspruch 1 mit einer Brechzahl $n_e$ von 1,487, einem Abbe-Wert $v_e$ von 81,4 sowie einem positiven anomalen Teildispersionswert $+\Delta v_e$ von 18,3, gekennzeichnet durch folgende elementare Zusammensetzung (in Gew.-%):

| | |
|---|---|
| Mg | 2,18 |
| Ca | 9,19 |
| Sr | 13,18 |
| Ba | 10,78 |
| Al | 8,22 |
| Ti | 0,12 |
| Na | 0,36 |
| K | 1,85 |
| P | 7,07 |
| O | 10,95 |
| F | 36,06 |
| H | 0,04 |

5. Verfahren zur Herstellung eines Glases nach einem der vorhergehenden Ansprüche, dadurch gekennzeichnet, daß es aus einem Gemenge erschmolzen wird, welches folgende Zusammensetzung aufweist (in Gew.-%):

| | |
|---|---|
| $Ba(PO_3)_2$ | 18 —20 |
| $Al(PO_3)_3$ | 4 — 7 |
| $MgF_2$ | 1,5— 4 |
| $CaF_2$ | 18 —20 |
| $SrF_2$ | 25 —29 |
| $BaF_2$ | 0,5— 2 |
| $AlF_3$ | 22 —26 |

6. Verfahren nach Anspruch 5, dadurch gekennzeichnet, daß das Gemenge folgende Zusammensetzung aufweist (in Gew.-%):

| | |
|---|---|
| $Ba(PO_3)_2$ | 19,7 |
| $Al(PO_3)_3$ | 5,6 |
| $MgF_2$ | 2,8 |
| $CaF_2$ | 19,1 |
| $SrF_2$ | 27,3 |
| $BaF_2$ | 1,0 |
| $AlF_3$ | 24,5 |

7. Verfahren zur Herstellung eines Glases nach einem der Ansprüche 1 bis 4, dadurch gekennzeichnet, daß es aus einem Gemenge erschmolzen wird, welches folgende Zusammensetzung aufweist (in Gew.-%):

| | |
|---|---|
| $NaPO_3$ | 1 — 3 |
| $Ba(PO_3)_2$ | 4 — 6 |
| $Al(PO_3)_3$ | 14 —17 |
| $MgF_2$ | 4 — 7 |
| $CaF_2$ | 16 —19 |
| $SrF_2$ | 17 —20 |
| $BaF_2$ | 9 —12 |
| $AlF_3$ | 19 —22 |
| $KHF_2$ | 2 — 5 |
| $K_2TiF_6$ | 0,5— 1 |

8. Verfahren nach Anspruch 7, dadurch gekennzeichnet, daß das Gemenge folgende Zusammensetzung aufweist (in Gew.-%):

| | |
|---|---|
| $NaPO_3$ | 1,6 |
| $Ba(PO_3)_2$ | 5,0 |
| $Al(PO_3)_3$ | 15,7 |
| $MgF_2$ | 5,6 |
| $CaF_2$ | 17,9 |
| $SrF_2$ | 18,9 |
| $BaF_2$ | 10,8 |
| $AlF_3$ | 20,6 |
| $KHF_2$ | 3,3 |
| $K_2TiF_6$ | 0,6 |

9. Verfahren nach einem der Ansprüche 5 bis 8, dadurch gekennzeichnet, daß es nach den folgenden Schritten abläuft:

a) portionsweises Eingeben des Gemenges in einen auf ca. 850°C erhitzten Platintiegel innerhalb von 90 Minuten;

b) Erhöhen der Schmelztemperatur auf 1050—1100°C innerhalb einer Zeit von bis zu 15 Minuten;

c) Intervall-Rühren mit einer Rührgeschwindigkeit von etwa 150 Umdrehungen pro Minute innerhalb einer Zeit von bis zu 25 Minuten;

d) Absenken der Temperatur auf 885—920°C und Reduzieren der Rührgeschwindigkeit auf etwa 120 Umdrehungen pro Minute;

e) weiteres Reduzieren der Temperatur auf 695—725°C sowie der Rührgeschwindigkeit auf etwa 80 Umdrehungen pro Minute, bis die Schmelze blasenfrei ist;

f) Abgießen in auf ca. 500°C vorgewärmte Aluminium-Formen;

g) Feinkühlen im Ofen.

10. Verfahren nach Anspruch 9, dadurch gekennzeichnet, daß es nach den folgenden Schritten abläuft:

a) portionsweises Eingeben des Ausgangsgemenges in einen auf 850°C erhitzten Platintiegel innerhalb von 90 Minuten;

b) Erhöhen der Schmelztemperatur auf 1080°C innerhalb einer Zeit von 15 Minuten;

c) Intervall-Rühren mit einer Rührgeschwindigkeit von 150 Umdrehungen pro Minute innerhalb einer Zeit von 25 Minuten;

d) Absenken der Temperatur auf 900°C und Reduzieren der Rührgeschwindigkeit auf 120 Umdrehungen pro Minute;

e) weiteres Reduzieren der Temperatur auf 710°C sowie der Rührgeschwindigkeit auf 80 Umdrehungen pro Minute, bis die Schmelze blasenfrei ist;

f) Abgießen in auf 500°C vorgewärmte Aluminium-Formen;

g) Feinkühlen im Temperofen.

**Revendications**

1. Verre optique au fluorophosphate à base de $Ba(PO_3)_2$, $Al(PO_3)_3$, fluorures alcalinoterreux et $AlF_3$, ayant un indice de réfraction $n_e$ compris entre 1,47 et 1,50, une valeur de Abbe $v_e$ comprise entre 85 et 80 ainsi qu'une valeur de dispersion partielle anomale positive $+\Delta v_e$ comprise entre 17 et 22, caractérisé en ce qu'il présente la composition élémentaire qui suit (en % pondéral):

| | |
|---|---|
| Mg | 0,5 — 3,0 |
| Ca | 8 —10 |
| Sr | 12 —20 |
| Ba | 9 —12 |
| Al | 7 — 9 |
| Ti | 0 — 1 |
| Na | 0 — 1 |
| K | 0 — 3 |
| P | 5 — 9 |
| O | 8 —12 |
| F | 35 —38 |
| H | 0 — 0,5 |

2. Verre selon la revendication 1, ayant un indice de réfraction $n_e$ compris entre 1,48 et 1,49, une valeur de Abbe $v_e$ comprise entre 84,1 et 81,4 ainsi qu'une valeur de dispersion partielle anomale positive $+\Delta v_e$ comprise entre 18,2 et 21,0, caractérisé par la composition élémentaire suivante (en % pondéral):

| | |
|---|---|
| Mg | 1,0 — 2,2 |
| Ca | 9,1 — 9,8 |
| Sr | 13,1—19,0 |
| Ba | 10,0—10,8 |
| Al | 8,2 — 8,5 |
| Ti | 0 — 0,2 |
| Na | 0 — 0,4 |
| K | 0 — 1,9 |
| P | 6,1 — 7,1 |
| O | 9,4—11,0 |
| F | 36,0—36,2 |
| H | 0 — 0,1. |

3. Verre selon l'une quelconque des revendications précédentes ayant un indice de réfraction $n_e$ de 1,488, une valeur de Abbe $v_e$ de 84,1 ainsi qu'une valeur de dispersion partielle anomale positive $+\Delta v_e$ de 21, caractérisé par la composition élémentaire suivante (en % pondéral):

| | |
|---|---|
| Mg | 1,1 |
| Ca | 9,8 |
| Sr | 19,0 |
| Ba | 10,0 |
| Al | 8,5 |
| P | 6,1 |
| O | 9,4 |
| F | 36,1 |

4. Verre selon la revendication 1, ayant un indice de réfraction $n_e$ de 1,487, une valeur de Abbe $v_e$ de 81,4 ainsi qu'une valeur de dispersion partielle anomale positive $+\Delta v_e$ de 8,3, caractérisé par la composition élémentaire suivante (en % pondéral):

| | |
|---|---|
| Mg | 2,18 |
| Ca | 9,19 |
| Sr | 13,18 |
| Ba | 10,78 |
| Al | 8,22 |
| Ti | 0,12 |
| Na | 0,36 |
| K | 1,85 |
| P | 7,07 |
| O | 10,95 |
| F | 36,06 |
| H | 0,04 |

5. Procédé de production d'un verre selon l'une quelconque des revendications précédentes, caractérisé en ce qu'il est élaboré à partir d'une fritte qui présente la composition suivante (en % pondéral):

| | |
|---|---|
| $Ba(PO_3)_2$ | 18 —20 |
| $Al(PO_3)_3$ | 4 — 7 |
| $MgF_2$ | 1,5— 4 |
| $CaF_2$ | 18 —20 |
| $SrF_2$ | 25 —29 |
| $BaF_2$ | 0,5— 2 |
| $AlF_3$ | 22 —26. |

6. Procédé selon la revendication 5, caractérisé en ce que la fritte présente la composition suivante (en % pondéral):

| | |
|---|---|
| $Ba(PO_3)_2$ | 19,7 |
| $Al(PO_3)_3$ | 5,6 |
| $MgF_2$ | 2,8 |
| $CaF_2$ | 19,1 |
| $SrF_2$ | 27,3 |
| $BaF_2$ | 1,0 |
| $AlF_3$ | 24,5. |

7. Procédé pour la production d'un verre selon l'une quelconque des revendications 1 à 4, caractérisé en ce qu'il est élaboré à partir d'une fritte qui présente la composition suivante (en % pondéral):

| | |
|---|---|
| $NaPO_3$ | 1 — 3 |
| $Ba(PO_3)_2$ | 4 — 6 |
| $Al(PO_3)_3$ | 14 —17 |
| $MgF_2$ | 4 — 7 |
| $CaF_2$ | 16 —19 |
| $SrF_2$ | 17 —20 |
| $BaF_2$ | 9 —12 |
| $AlF_3$ | 19 —22 |
| $KHF_2$ | 2 — 5 |
| $K_2TiF_6$ | 0,5— 1. |

8. Procédé selon la revendication 7, caractérisé en ce que la fritte présente la composition suivante (en % pondéral):

| | |
|---|---|
| $NaPO_3$ | 1,6 |
| $Ba(PO_3)_2$ | 5,0 |
| $Al(PO_3)_3$ | 15,7 |
| $MgF_2$ | 5,6 |
| $CaF_2$ | 17,9 |
| $SrF_2$ | 18,9 |
| $BaF_2$ | 10,8 |
| $AlF_3$ | 20,6 |
| $KHF_2$ | 3,3 |
| $K_2TiF_6$ | 0,6. |

9. Procédé selon l'une quelconque des revendications 5 à 8, caractérisé en ce qu'il comporte les étapes suivantes:

a) introduction, par portions, de la fritte dans un creuset en platine chauffé à environ 850°C en 90 minutes;

b) augmentation de la température du bain à 1050—1100°C en un temps pouvant atteindre 15 minutes;

c) agitation par intervalles avec une vitesse d'agitation d'environ 150 tours par minute en un temps pouvant atteindre 25 minutes;

d) diminution de la température à 885—920°C et réduction de la vitesse d'agitation à environ 120 tours par minute;

e) plus ample réduction de température à 695—725°C ainsi que de la vitesse d'agitation à environ 80 tours par minute, jusqu'à ce que le bain soit sans boursouflure;

f) moulage dans des moules en aluminium préchauffés à environ 500°C;

g) refroidissement précis au four.

10. Procédé selon la revendication 9, caractérisé en ce qu'il comporte les étapes suivantes:

a) introduction, par portions, de la fritte de départ dans un creuset en platine chauffé à 850°C en 90 minutes;

b) augmentation de la température du bain à 1080°C en un temps de 15 minutes;

c) agitation par intervalles à une vitesse d'agitation de 150 tours par minutes en un temps de 25 minutes;

d) diminution de la température à 900°C et réduction de la vitesse d'agitation à 120 tours par minute;

e) plus ample réduction de la température à 710°C ainsi que de la vitesse d'agitation à 80 tours par minute, jusqu'à ce que le bain soit sans boursouflure;

f) moulage dans des moules en aluminium préchauffés à environ 500°C;

g) refroidissement précis dans un four de trempe.

**Claims**

1. Optical fluorophosphate glass on the base of $Ba(PO_3)_2$, $Al(PO_3)_3$, alkaline earth fluorides and $AlF_3$ with a refractive index $n_e$ between 1.47 and 1.50, an Abbe value $v_e$ between 85 and 80 as well as a positive anomalous partial dispersion value $+\Delta v_e$ between 17 and 22, characterised thereby, that it displays the following elementary composition (in % by weight):

| | |
|---|---|
| Mg | 0.5— 3.0 |
| Ca | 8 —10 |
| Sr | 12 —20 |
| Ba | 9 —12 |
| Al | 7 — 9 |
| Ti | 0 — 1 |
| Na | 0 — 1 |
| K | 0 — 3 |
| P | 5 — 9 |
| O | 8 —12 |
| F | 35 —38 |
| H | 0 — 0.5. |

2. Glass according to claim 1 with a refractive index $n_e$ between 1.48 and 1.49, an Abbe value $v_e$ between 84.1 and 81.4 as well as a positive anomalous partial dispersion value $+\Delta v_e$ between 18.2 and 21.0, characterised by the following elementary composition (in % by weight):

| | |
|---|---|
| Mg | 1.0— 2.2 |
| Ca | 9.1— 9.8 |
| Sr | 13.1—19.0 |
| Ba | 10.0—10.8 |
| Al | 8.2— 8.5 |
| Ti | 0 — 0.2 |
| Na | 0 — 0.4 |
| K | 0 — 1.9 |
| P | 6.1— 7.1 |
| O | 9.4—11.0 |
| F | 36.0—36.2 |
| H | 0 — 0.1. |

11

3. Glass according to one of the preceding claims with a refractive index $n_e$ of 1.488, an Abbe value $v_e$ of 84.1 as well as a positive anomalous partial dispersion value $+\Delta v_e$ of 21, characterised by the following elementary composition (in % by weight):

| | |
|---|---|
| Mg | 1.1 |
| Ca | 9.8 |
| Sr | 19.0 |
| Ba | 10.0 |
| Al | 8.5 |
| P | 6.1 |
| O | 9.4 |
| F | 36.1. |

4. Glass according to claim 1 with a refractive index $n_e$ of 1.487, an Abbe value $v_e$ of 81.4 as well as a positive anomalous partial dispersion value $+\Delta v_e$ of 18.3, characterised by the following elementary composition (in % by weight):

| | |
|---|---|
| Mg | 2.18 |
| Ca | 9.19 |
| Sr | 13.18 |
| Ba | 10.78 |
| Al | 8.22 |
| Ti | 0.12 |
| Na | 0.36 |
| K | 1.85 |
| P | 7.07 |
| O | 10.95 |
| F | 36.06 |
| H | 0.04. |

5. Method for the production of a glass according to one of the preceding claims, characterised thereby, that it is molten from a batch which displays the following composition (in % by weight):

| | |
|---|---|
| $Ba(PO_3)_2$ | 18.5—20 |
| $Al(PO_3)_3$ | 4 — 7 |
| $MgF_2$ | 1.5— 4 |
| $CaF_2$ | 18 —20 |
| $SrF_2$ | 25 —29 |
| $BaF_2$ | 0.5— 2 |
| $AlF_3$ | 22 —26 |

6. Method according to claim 5, characterised thereby, that the batch displays the following composition (in % by weight):

| | |
|---|---|
| $Ba(PO_3)_2$ | 19.7 |
| $Al(PO_3)_3$ | 5.6 |
| $MgF_2$ | 2.8 |
| $CaF_2$ | 19.1 |
| $SrF_2$ | 27.3 |
| $BaF_2$ | 1.0 |
| $AlF_2$ | 24.5 |

7. Method for the production of a glass according to one of the claims 1 to 4, characterised thereby, that it is molten from a batch which displays the following composition (in % by weight):

| | |
|---|---|
| $NaPO_3$ | 1 — 3 |
| $Ba(PO_3)_2$ | 4 — 6 |
| $Al(PO_3)_3$ | 14 —17 |
| $MgF_2$ | 4 — 7 |
| $CaF_2$ | 16 —19 |
| $SrF_2$ | 17 —20 |
| $BaF_2$ | 9 —12 |
| $AlF_3$ | 19 —22 |
| $KHF_2$ | 2 — 5 |
| $K_2TiF_6$ | 0.5— 1 |

8. Method according to claim 7, characterised thereby, that the batch displays the following composition (in % by weight):

| | |
|---|---|
| $NaPO_3$ | 1.6 |
| $Ba(PO_3)_2$ | 5.0 |
| $Al(PO_3)_3$ | 15.7 |
| $MgF_2$ | 5.6 |
| $CaF_2$ | 17.9 |
| $SrF_2$ | 18.9 |
| $BaF_2$ | 10.8 |
| $AlF_3$ | 20.6 |
| $KHF_2$ | 3.3 |
| $K_2TiF_6$ | 0.6. |

9. Method according to one of the claims 5 to 8, characterised thereby, that it takes place by the following steps:

a) portionwise input of the batch within 90 minutes into a platinum crucible heated to about 850°C,

b) raising the temperature of the melt to 1050 to 1100°C within a time of up to 15 minutes,

c) intermittent stirring at a stirring speed of about 150 revolutions per minute within a time of up to 25 minutes,

d) lowering of the temperature to 885 to 920°C and reducing the stirring speed to about 120 revolutions per minute,

e) further reduction of the temperature to 695 to 725°C as well as of the stirring speed to about 80 revolutions per minute until the melt is free of bubbles,

f) pouring off into aluminium moulds preheated to about 500°C and

g) fine cooling in the furnace.

10. Method according to claim 6, characterised thereby, that it takes place by the following steps:

a) portionwise input of the initial batch within 90 minutes into a platinum crucible heated to 850°C,

b) raising the temperature of the melt to 1080°C within a time of 15 minutes,

c) intermittent stirring at a stirring speed of 150 revolutions per minute within a time of 25 minutes,

d) lowering of the temperature to 900°C and reducing the stirring speed to 120 revolutions per minute,

e) further reduction of the temperature to 710°C as well as of the stirring speed to 80 revolutions per minute until the melt is free of bubbles,

f) pouring off into aluminium moulds preheated to 500°C and

g) fine cooling in the tempering furnace.